# EUROPEAN PATENT SPECIFICATION

(11) **EP 2 712 238 B1**
(45) Date of publication and mention of the grant of the patent: **09.01.2019**
(21) Application number: 13004513.1
(22) Date of filing: 16.09.2013
(51) Int. Cl.: H04W 12/08, H04L 29/06

(54) **Method, network, system and devices for generalized access to telecommunication networks**
Methode, Netzwerk-, System-und Geräte für den universellen Zugang zu Telekommunikationsnetzen
Méthode, réseau, système et dispositifs pour l'accès généralisé aux réseaux de télécommunication

(30) Priority: 19.09.2012 IT VE20120033
(43) Date of publication of application: 26.03.2014
(73) Proprietor: Milano Teleport S.p.A., 20084 Lacchiarella (MI) (IT)
(72) Inventor: Favaretto, Fabio, 30173 Mestre (VE) (IT); Stainer, Carlo, 27010 SAN Genesio ED Uniti (PV) (IT); Gallo, Umberto, 20122 Milano (IT); Mossino, Nicola, 10054 Cesana Torinese (TO) (IT)
(74) Representative: Bruni, Giovanni

(56) References cited:
- US-A1- 2006 084 417
- US-A1- 2006 105 746
- US-A1- 2007 037 566
- US-A1- 2009 316 623
- US-A1- 2010 159 877

## Description

The present invention generally relates to the generalized access to different geographical wide area telecommunications networks.

In particular, the preferred application of the invention provides access to geographical wide area telecommunications networks from environments where access is difficult or subdued to restrictions, as for example on board of crafts, which, according to their position, can have access to different geographical wide area networks, with different performance and costs.

In the following, in many cases, with telecommunications networks it is intended geographical wide area networks or local area networks.

With local area networks it is intended those networks which allow communication only between a reduced number of terminals or computers connected to said network and which are in a well circumscribed environment; and with geographical wide area networks it is intended those networks which allow communications with terminals or computers everywhere in the world. Typically, the geographical wide areas networks are public and managed by operators offering connection to a great number of users, their customers; the local area networks can be, instead, in a great deal of cases, private networks, and the access allowed only to terminals or computers controlled by the local area network manager. If the distinction is not highlighted, the concepts can be applied to both the network types, or the respective network type will be clear from the contest.

At the state of the art, the access to telecommunication networks occurs via terminals suitable to access to each specific network.

For example, on board of a ship, there can be an Inmarsat terminal which can be used to access to the Inmarsat networks and relative services, but there can be also, or alternatively, a satellite station V-SAT, which provides a satellite connection to the Internet network, and in such a case the Internet access generally occurs by means of a computer connected to a satellite modem which functions as terminal of that specific network.

Yet continuing with the example relating to the different connection possibilities which can be available on a ship, another alternative is given by the possibility to access to the terrestrial mobile radio networks when the ship is near the coast; in such a case the access is carried out by the users via their mobile terminal which is the same used when they are on land.

Yet continuing with the cited example, it can be observed how the various above cited accesses have different characteristics in terms of costs, performance and, above all, how it is not easy and immediate for a user to use optimally the various possible services; and in general, the fact that the user has to use different terminals to access to different networks.

The just described example can be generalized.

In many environments, in fact, and not only on ships, there can be available a plurality of networks, with different performances, costs and availabilities. The availability of an access, in fact, can depend both on the presence or not of an infrastructure, but also on the fact that an infrastructure, even if provided, can be completely occupied by other users, and so it could be useful that a connection occurs on an alternative infrastructure, which, instead, can be free.

Today, both for technical reasons and management and operative reasons, it is unusual that the telecommunication services are activated in a flexible way on a network physically available in a given place or environment. Generally, each telecommunication service request is activated on the network in which the user requesting is registered, and the communication is supported by a terminal specific for each access technology. In order to access to a UMTS network, it is necessary to use an UMTS terminal to access to an Inmarsat network, it is necessary to use an Inmarsat terminal, and so on.

Another important trend in the state of the art is that, even with always new and more performing network standards, the great majority of users' terminals is provided with some access interfaces which are becoming universal.

Therefore, it happens that the UMTS or LTE terminals (to cite the most important mobile telecommunication standards only) but also all the portable computers (for example the so called tablets) are provided with a Wi-Fi interface, and they are all, actually, computers provided with an operative system on which there can be downloaded applications.

Therefore, the local connectivity is frequently guaranteed with wireless techniques, the so called Wi-Fi, i.e. based on IEEE 802.11x IETF standards (Internet Engineering Task force).

Therefore, by now, the Wi-Fi technology, in its various evolved versions, represents the dominating standard to realize the local area networks.

A behavior, always more established and typical among users, is to verify if in a given place there is Wi-Fi coverage, and if this one is available without protections. In many cases, such access is available and the users can satisfy their needs of communication by connecting to a local Wi-Fi network, and, through this local area network, if there are no restrictions, they can connect to the geographical wide area internet network.

Relating to such access mode, the state of the art provides many solutions for managing the services which can be supported in this way.

Obviously, the telecommunication network access is a very wide subject; in the present contest it is solely intended to highlight some aspects of the state of the art, in particular:
- the great diffusion of devices provided with a wireless access interface representing actually an universal standard (today it is the Wi-Fi interface, in the future there can become established other technologies as well, integrated in the majority of terminals, as for example of NFC - Near Field Communication type),
- and the fact that usually in a determined environment there are provided more networks, which therefore can be used by the users present in such environments.

At the state of the art, the access to the telecommunication networks suffers form the lack of flexibility which is made available for the users for accessing to the various networks provided in an environment. The problem is handled in some cases, but always partially and not generally.

For example, some mobile operators, in addition to their licensed band (for example UMTS) are provided with a certain number of so called "hot spots" in Wi-Fi technology. The "hot-spots" are areas where it is provided the generation of a great quantity of traffic by the users. When an user tries to access to the network, and is in one of these "hot-spot" he can be served by the Wi-Fi access, which is generally cheaper than the access to the precious frequencies in licensed band. In this way, the operators can save the radio resources on licensed band to offer coverage outside the "hot-spots": in fact, the "hot spot" do not allow to provide a continuous and uniform coverage on wide areas (they are apt to cover small areas).

The mobile operators having these infrastructural alternatives have conceived and invented different procedures to manage optimally this possibility to allocate traffic. To do so, they introduced in their networks suitable servers able to support these procedures, and, generally, they provided the terminals of their customers with suitable software applications. Solutions as the one just described begin to be quite diffused, but not in a general way. In fact, the user has to be provided with two access interfaces (the Wi-Fi interface, and UMTS or LTE interface) and the choice of the network to be used is limited to the predefined networks of the operator which guides the user on its own networks or on networks for which there exists a deal between operators. The techniques used in the above described case are not apt to allow general access to networks other than the ones initially provided, without the user being provided with a suitable terminal. Moreover, the known techniques do not allow the manager of a particular environment to get the connectivity services autonomously and to put them at the users disposal who frequent that environment, thus allowing such users to continue to use their terminal.

Another network architecture which allows to serve the traffic generated in a moving circumscribed environment is described in [US 2009/316623 A1 (Pettersson et al.)]. According to Pettersson's solution, a so called "Moving network" is kept attached (i.e. connected) to a "Home network" via a plurality of telecommunication "tunnels", which are able to guarantee the connectivity between said "Moving network" and said "Home network" in different conditions (in fact the transmission resources to support said "tunnels" are not always available). The solutions may have some variants, but in all cases the so called "Moving network" is a sort of extension of the "Home network" which guarantees access in some specific conditions where the direct access is not possible. The management of the "Moving network" is then on behalf of the Network operator who operates the "Home network". In Pattersson's solution there is not a role for a service operator who would like to manage directly a bundle of services to be offered to his customers by means of a local network (i.e. a "Moving network"), without being dependent from a Network operator, operating a large geographical network. In environments in which the telecommunication services are conditioned by technical or cost limitations and their availability is critical as well, there is the problem of providing such environments with different telecommunication connectivity services to be activated at the same time or selectively according to the cases. In general, such services can be acquired by distinct operators who are not coordinated and who offer connectivity with infrastructures of distinct networks. Additional background art is represented by patent publication documents US2010/159877 A1, US2007/037466 A1 and US2006/105746 A1.

An environment as the one described is for example a ship. A ship, in fact, can be in places where the unique possible connectivity is the one obtainable via satellite, and also in this case it is possible to consider different types of connectivity with different features.

For example, the connectivity offered by the "Inmarsat" network has a global coverage but it is generally expensive and has significant capacity limits, while the connectivity which can be offered with V-SAT stations can have more limited coverage areas but at lower costs and higher performance. Finally, if the ship is near the coast, there can be available services whose coverage is provided from land.

Aim of the present invention is to provide, in a circumscribed environment, a unified access to various geographical wide area telecommunication networks possibly managed by various operators which do not necessarily operate in coordinated way; in general the operators of the various geographical wide area networks providing connectivity to said circumscribed environment are different and it is not possible to ask them to cooperate.

Another aim of the present invention is to manage the choice of the networks on which the various networks are to be activated time by time in a simple way from the final user's point of view, assigning to each final user the right terminal he is allowed to use, time by time.

Another aim of the present invention is to make the type of physical connection being used the most transparent possible for the final user, who has to be able to access to the various telecommunication services, which are available through different terminals, by means of his personal device. Another aim of the present invention is to allow the manager of the circumscribed environment, where the service is provided, to authorize or not, or to limit the services each final user is enabled to.

Finally, another aim of the present invention is to count the quantity and the type of telecommunication traffic, which each final user generates on each one of the geographical wide area networks to which he can connect; this for a possible commercial use of the service by the local manager of the access.

These and other aims are achieved by a system comprising an access local area network and a switching system made up of a plurality of terminals, each one specific for the various geographical wide areas networks to which it is possible to connect from the circumscribed environment in which it is provided said access local area network, and characterized in that the switching system allows to connect an user accessing to said access local area network to one of the various geographical wide area networks, by means of the specific terminal which allows the connection to the chosen geographical wide area network.

The present invention is advantageous in that a network architecture articulated according to the teachings described in the following satisfies all the aims for which it is conceived; more precisely, in a circumscribed environment where it is possible to access to various geographical wide area telecommunication networks by means of various terminals, a manager of said circumscribed environment is allowed to provide, according to flexibly definable criteria, an access service to each of the various geographical wide area networks to general users enabled to connect from said circumscribed environment using an unique user device. The object of the invention is solved by the subject-matter of the independent claims. Preferred embodiments are defined in the dependent claims.

The invention is also provided with other advantages which will be better highlighted in the following description, in the appended claims which are integral part of the same description, in the description of some embodiments described as a way of not limiting example, and in the appended drawings, in which:
Figure 1 shows a general scheme of the overall system;
Figure 2 shows an access controller to the local area network;
Figures 3, 4a, 4b and 5 show some examples of procedures which help to understand how the overall system according to the invention works.

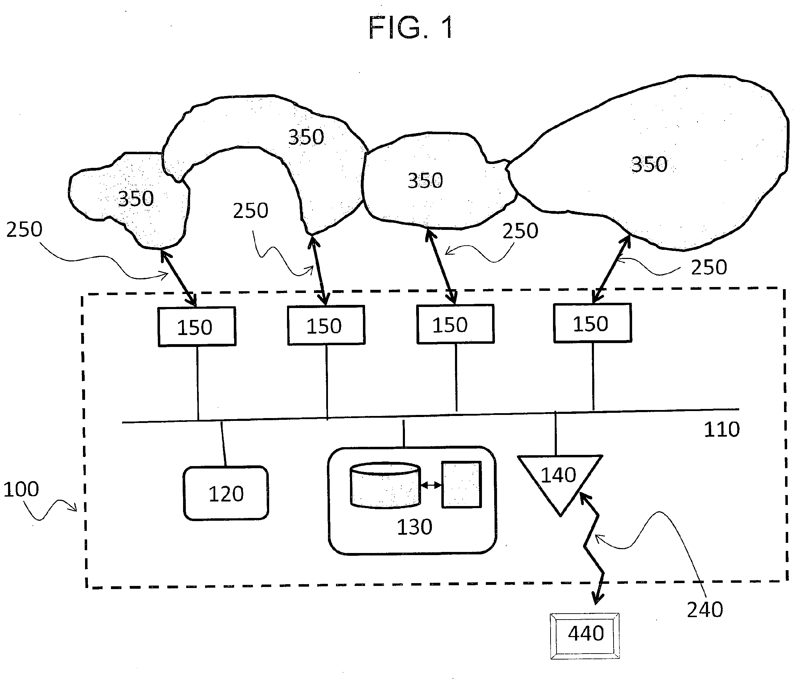

A system 100, shown in figure 1, comprises some functional blocks essential for providing the present invention. In a typical embodiment of the invention, said functional blocks correspond to some physical elements connected between each other as in figure or integrated in a unique device. Therefore, the system 100 comprises a certain number of terminals 150, each one enabled to access to a distinct geographical wide area network 350 (possibly each one based on a different technology) by means of an access connection 250, distinct from terminal to terminal as well. In the embodiment described in figure 1, said terminals 150 are all connected between each other by means of a local area network 110.

Other functional blocks are connected to the local area network 110 as well.

The functional block 120 is a connectivity controller to geographical wide area networks. Said connectivity controller to geographical wide area networks 120 carries out a procedure by means of which it is able to determine the status of the various terminals 150. In particular, it is able to verify which geographical wide area network 350 is available, the activity status (in communication or not) of the terminals 150 and it is able to send commands to the various terminals 150 in order to activate or eliminate transmission (or reception) sessions to (or from) the geographical wide area networks 350.

Therefore, the connectivity controller to geographical wide area networks 120 is able to maintain an updated table in which it is possible to consult in every moment the actual status of the single terminals 150 managed by the controller 120. The status of said terminals 150 can be also associated to contest information; for example, in the case of a sailing ship, it is possible to associate the terminal status to the position and the ship course, in addition to the time information. Said information, summed up as in a table, can be possibly stored and used by suitable applications: for example it is possible to create a map where there are defined the points where each particular connectivity is provided, or to verify if some connectivity is provided and available only in some time intervals, or it is possible to confront said maps built experimentally with theoretical maps and, in the case deformities are highlighted (for example a determined connectivity is not actually provided while, on paper, it should be so), to activate other verification procedures to diagnose the possible presence of a failure or a problem of other type.

In figure 1, it is also highlighted an access station 140 connected to the local area network 110. The access station 140 allows an user device 440 to access to the local area network 110 and, by means of said network to all the devices connected to the same, and in particular, to the various terminals 150 which in turn can access to the geographical wide area networks 350 by means of the connections 250.

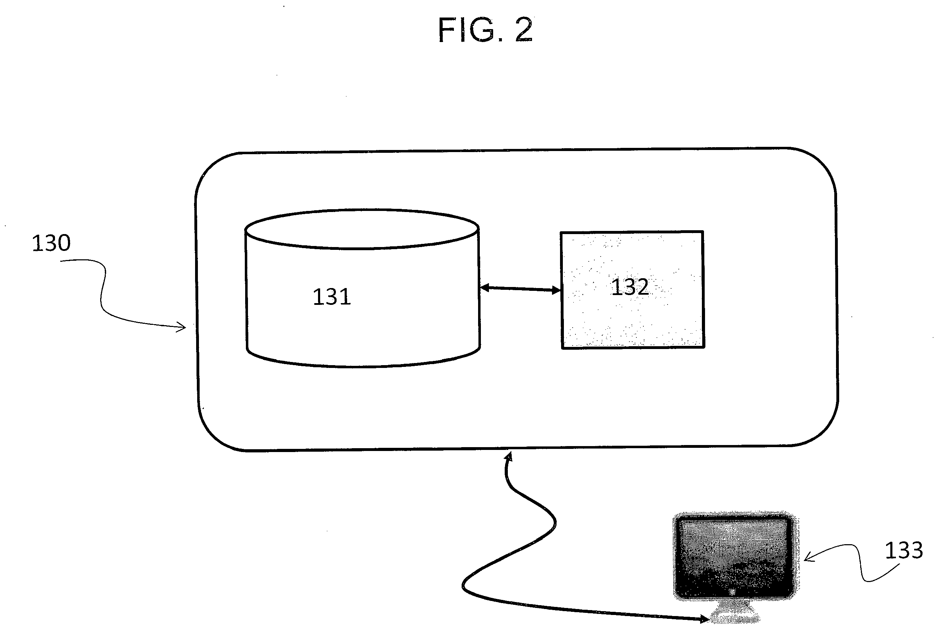

Finally, in figure 1 it is also highlighted a functional block 130. The functional block 130 is an access controller to the local area network. Said access controller to the local area network 130 is represented in figure 2 in more detail, where it is shown that it is provided with a man-machine local interface 133. By means of the local interface 133 it is possible to introduce locally some system configurations.

The interface 133 is also the interface by which the manager of the local area network enables the various users who can connect to the local area network 110 to use some telecommunication services (all those technically possible or only a portion thereof).

The access controller to the local area network 130 comprises at least storage means 131 able to store the system configurations and the various enabling profiles, definable locally by means of the local interface 133, and comprises also data processing means 132 able to carry out suitable functions specified in the following.

Therefore the access controller to the local area network 130 carries out some procedures, among which:
- an enabling procedure of devices 440;
- a registration procedure of devices 440;
- an authorization procedure allowing the devices 440, previously enabled and registered, to carry out traffic on the local area network 110;
- an authorization procedure allowing the devices 440, previously enabled and registered, to exchange traffic with one or more geographical wide area networks 350 according to the previously configured authorizations;
- a command procedure to a connectivity controller to geographical wide area networks 120, so that it activates or deactivates the connectivity services with the geographical wide area networks time by time requested, by using specific terminals 150;
- a counting procedure of the traffic carried out by each device 440, classified for type and routing;
- inbound or outbound traffic buffering procedures, to or from single devices 440, in order to optimize the use both of the local area network resources and the use of the geographical wide area network resources;
- a routing decision procedure with priority criteria towards different geographical wide area networks 350.

In a typical embodiment of the present invention, it is clear how the access controller to the local area network 130 carries out some typical functions of a "routing" node, characterized in that it directs the traffic generated by some devices in function of locally settable criteria, and in function of information which can be retrieved by means of the connection with a connectivity controller to geographical wide area networks 120.

The devices which can highlight the availability or not and the status of the single geographical wide area networks 350 are the terminals 150, each one for the network of which it is access terminal.

This latter concept can be clear also for those not skilled in the art; it is in fact common experience that on the "display" of a terminal for mobile telecommunication there are provided icons representing the status of the relative network of each terminal, and thanks to such icons the user, even if not skilled, can understand in real time the presence or not of connectivity, and can also have at disposal a qualitative evaluation of the power of the available coverage. The connectivity controller to geographical wide area networks 120 can interface itself with all the terminals 150 and so can acquire in real time all the relevant information on the status of the geographical wide are networks 350, which can be detected by the single terminals 150. Said status information, together with other information, such for example the current status of the various terminals 150 and commercial information (for example the cost of each connection type) can be shared between the connectivity controller to geographical wide area networks 120 and the access controller to the local area network 130, and, in general, this information can be available for various servers which can be connected to the local area network 110.

Before better describing the cited procedures and the system functioning as a whole, it is highlighted how said functional blocks can be realized with distinct devices or in integrated devices in which two or more functional blocks can be integrated in a single device. For example, the connectivity controller to geographical wide area networks 120 can comprise one or more terminals 150 integrated, as for example, a Wi-Max terminal, an UMTS terminal or an LTE terminal. Or the access controller to the local area network 130 can be physically integrated with the connectivity controller to geographical wide area networks 120. Therefore, it is clear how each type of device providing a procedure or combination of procedures as the ones previously described has to be considered a different embodiment of the same invention.

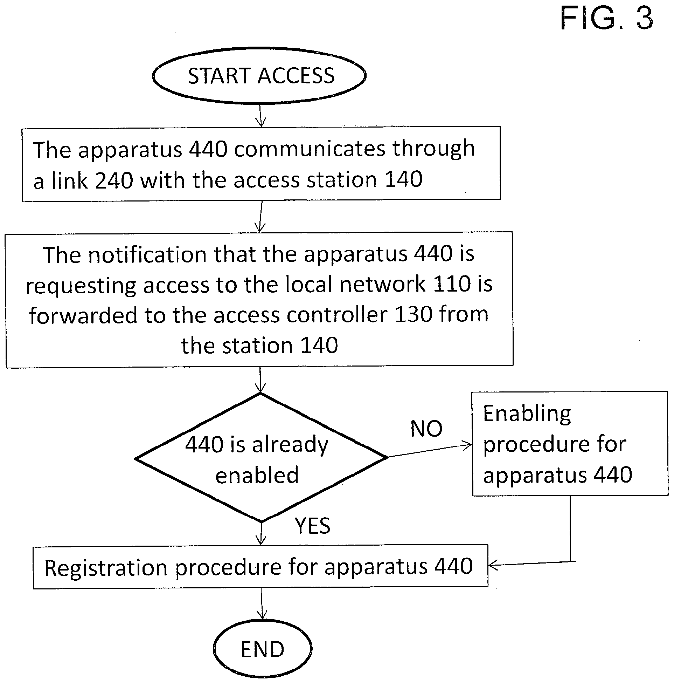

In figure 3 there are shown the initial steps of the procedure occurring in the system 100 when a device 440 provided with a suitable interface is connected to an access station 140 by means of a link 240.

Through the station 140, to the local access controller 130 it is notified the request of the device 440 to access to the local area network 110.

The device 440 can be enabled yet and so it is possible to proceed directly to the network registration procedure; on the contrary it is needed to proceed with the enabling procedure first requesting the intervention of the local area network manager, who in the scope of said enabling procedure defines the features of the services which can be used by the user by means of his own device 440.

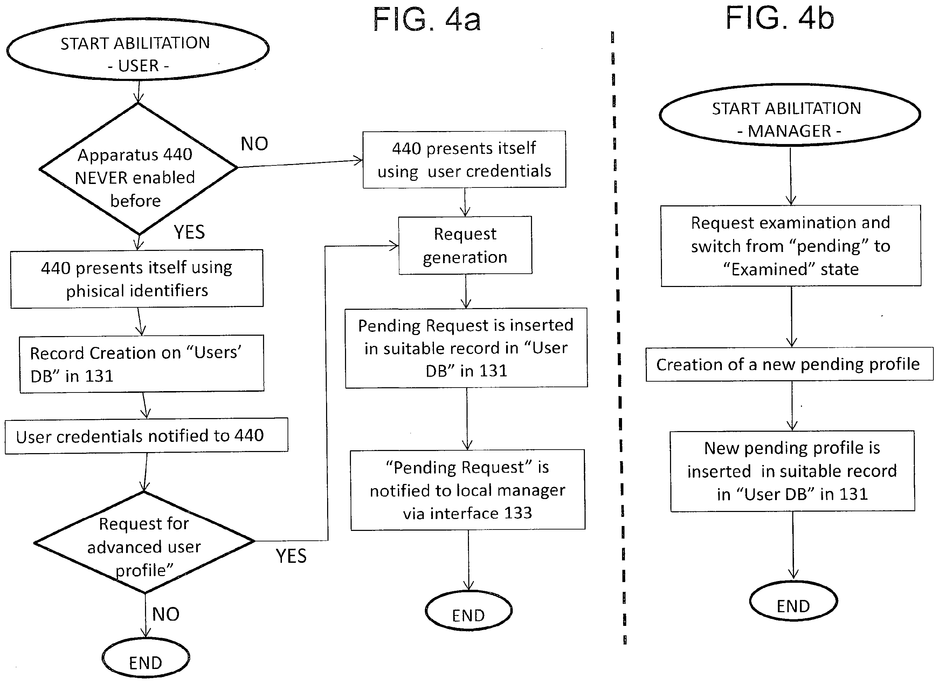

Figures 4a and 4b show the main steps of the enabling procedure of a user provided with a device 440. This procedure requires steps both from the user and the manager of the local area network. If the controller of the access network 130 does not know the user it is needed to carry out a first enabling procedure in which the device 440 is provided with a physical label; therefore it is created a position in a user data-base, stored in 131; in this position there can be entered information about the user provided by the same user; there are then generated suitable credentials which can be communicated to the device 440 and can be used for the next registrations. Therefore, this first enabling embodiment allows a terminal to be registered in the local area network 110, but defines the user with a basic profile which, generally, is configured so that the user is allowed to use very few services. Therefore, the enabling procedure can provide a possibility, for the user, to request to be assigned a richer profile in which he can use more services. In such a case, the user generates a profile request which will be stored in the position associated to him in the user data-base: said request will be kept associated to a "pending" like status until it will be examined by the manager of the local area network, who will receive a notification, generally on the interface 133, about the fact that said request was formulated by the user.

However, an enabling request with a modified profile with respect to the active one can be requested in every moment by each user, who can generate said request by entering his active credentials.

As yet said, the enabling procedure has to provide the intervention of a local area network manager. In figure 4b there are shown the competence steps of the manager of the local area network 110. In particular, the manager of the local area network 110 has to interact with the access controller to the local area network 130 by means of an interface 133. After examining the request, said manager can generate a new user profile, which will receive in toto, in part or not at all the user requests. Also this latter profile, granted by the manager, is entered in the position associated to the user and assumes the "pending" status, while the request profile entered by the user passes from the "pending" status to the "examined" one.

The new profile entered by the manager can have the maximum flexibility; it can provide the rights to use well devised services, the use of well devised and also differentiated credentials according to the type of service. Therefore, said new profile is not operative until it is accepted by the user, who can proceed to the acceptance on the first registration attempt.

The procedure, as described, represents an example with various variants or simplifications: for the example the user acceptance can occur automatically in case the manager receives the user requests as a whole. It is clear that the description reported represents only an example to explain the practical feasibility of said procedures and their aim.

An important feature of the enabling mechanism proposed is the fact that the enabling procedure for using a geographical wide area network is not in the management systems of the manager of the considered geographical wide area network, but it is stored locally in the devices at level of the access local area network 110. Also the operations to be carried out to complete and/or upgrade the enabling process of each user are local as well.

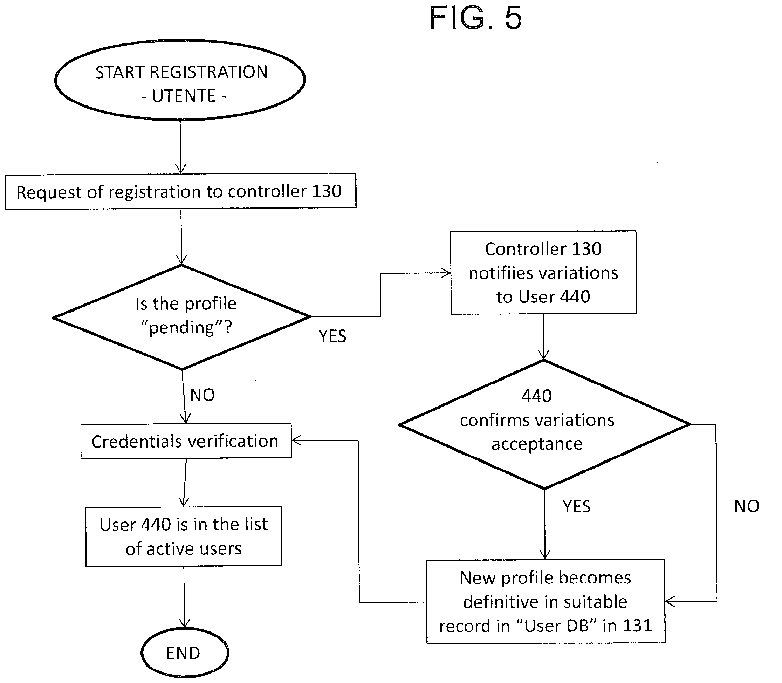

The registration procedure is summed up in figure 5. Said registration procedure can be carried out by an enabled user, which means a user known and recognizable by the network controller because of the existence of a position of his in the user data-base stored in 131.

To start the registration procedure, a user has to forward the request to the access controller to the local area network 130. In case, in his position, there is not a modified "pending" profile waiting for approval by the user, the registration proceeds with the classic steps of credentials verification and the following inclusion of the user in a registered customers list, which means active users, connected to the local area network 110 and enabled to use the services provided by their profile.

In case, instead, there is a modified "pending" status waiting for approval by the user, the controller notifies to the customer, who requested the profile registration, the granting by the manager of the local area network 110. The user can accept or not to assume the granted profile; in both cases, the position on the user data-base is upgraded by removing the "pending" and "examined" profiles (which can possibly remain stored for filing reasons), and only the profile chosen by the user, which can be the one proposed by the manager of the local area network 110 in case of acceptance, or the original profile previous to the variation request in case of rejection of the proposal of the manager of the local area network 110, will remain. In both cases, after the user data-base upgrading, the registration procedure continues with the credentials verification and the following entering of the user in the registered users list. Even if not highlighted in figure 5, it is clear that in case the credentials verification does not end successfully, the procedure ends without the user being registered in the network.

The registered devices 440 are then able to generate traffic on the local area network 110.

The present invention provides that said traffic is managed according to precise authorizations defined in the enabling step. It is therefore provided an authorization function, which is activated each time a device 440 generates traffic. In the exemplified case, said function is carried out by the access network controller 130, but it can be carried out by a suitable device, or can be carried out on a router or any other server provided in the local area network 110. This authorization function verifies if the traffic generated by the device 440 meets the rights claimed by the user using it, and in positive case, "authorizes" the machines interested by said traffic to receive and treat it.

The above described mechanism allows also to manage the connectivity to the geographical wide area networks. In fact, when the traffic generated by a device 440 requests the connectivity to a geographical wide area network, the authorization function can communicate the fact to the connectivity controller to geographical wide area networks 120, which will allow the routing of the traffic generated by 440 only by means of the devices 150 communicated by the authorization function, which in the typical case is carried out by the access local area network controller 130.

The connections 250 activated by the terminals 150 managed by the controller 120 will be used only for the transit of the data generated by the devices 440 authorized therefore. Moreover, the system architecture proposed allows also to carry out a more accurate discrimination and to realize control procedures allowing the use of determined connections 250 (considered valuable) only for communications linked to specific applications. Therefore, the discrimination on the traffic routing can occur with absolutely general criteria both in function of the user device 440 interested by the generation of said traffic, and in function of the type of service which generates said traffic and in function of a combination of elements.

The functional architecture described is simple to be implemented, in the access network controller 130, management/optimization programs of the connectivity to geographical wide area networks.

In the node 130, in fact, the rights of each user, his requests forwarded thereto and the instant availability of resources of connection to geographical wide area networks are known (this because the controllers 120 and 130 can exchange information); moreover there can be implemented commands procedures to be sent to the connectivity controller to geographical wide area networks 120 so that this latter activates or not some connections 250. Finally, on the controllers 120 or 130, it is possible to proceed to count the traffic carried out by the devices 440 via each connection 250.

It is to be noted that the architecture proposed provides the activation of possible connections 250 by the connectivity controller to geographical wide area networks 120; this means that the possible credentials requested by the manager of the geographical wide area network chosen are provided by a device belonging to (or managed by) the manager of the local area network, who will provide also for the payment of possible connection costs. The user accessing by means of the device 440, registers himself in the network 110 of the local manager, and the procedure needed for the connectivity to the geographical wide area is held transparent to him; it is then the manager of the local area network 110 who deals with the commercial management of the service as offered to the user by means of the device 440.

This scheme which provides an administrative filter by the manager of the local area network 110 can be applied also to other added value services and not only to telecom services; for example Internet payment services can be offered to the users, and this can occur without the user having to carry out an independent payment procedure, which is carried out by the manager of the local area network who in turn takes it out on the user according to more comfortable modes. The just described example in general terms can be further explained exemplifying a concrete case: on a passenger ship, every day the single passengers can download from the Internet a copy of a payment newspaper of their country; the payment of the singles copies can occur by the credential of the manager of the local area network, who can after credit the account (possibly pre-payed) of the passenger who downloaded the copy with the cost.

As it should be clear from the previous description, applications of this type are easily developable in the contest of the architecture described in the present invention.

A system as the described one allows to realize a local area network interconnected with geographical wide area networks by means of specific terminals of said geographical wide area networks, which can be added (or removed) with absolute flexibility, and independently of each other. The use of said geographical wide area networks can be allowed, at conditions definable with flexibility, to users registered in the local area network and provided with a personal terminal (generally with interface Wi-Fi), always identified as the device 440 so far.

A system as the described one is advantageous in that it decouples the local enabling, registration and authorization functions from the corresponding ones for accessing to the geographical wide area networks, and allows the manager of the local area network to define access criteria to the same geographical wide area network which differ according to the user or the service requested.

Another example of preferred application of the system proposed is given by the possibility to manage the Inmarsat phone traffic (which, at least for now, is particularly expensive). With the proposed system, it is very simple to enable or not each single customer to access to the expensive Inmarsat connections, for example it is possible to enable some customers only to inbound calls (such customers can be always reached by those who want to communicate with them) paid by the caller, while other customers can be enabled also to outbound calls, but with a traffic limit.

It is clear that there are many and various further examples. Those cited only aim at providing explanations of the description of the invention and at highlighting its advantages, without claiming to enlist all the types of applications allowed or preferred by the application of the present invention. Finally, a system as the one described allows to control the communication costs in environments as the marine one where such costs are always very expensive. And at the same time, it allows to manage an indefinite number of users who can use, in a controlled way, the telecom services provided in the considered environment.

It is clear that further variants can be made by those experts in the field without departing from the scope of the invention as it is claimed in the following.

It is also clear how the described system 100 actually features the application of a method which allows a manager of a circumscribed environment to offer to the users hosted in such circumscribed environment communication services to geographical wide area networks. The method provides that the manager of the respective environment offers (and arranges) an infrastructure of local area network covering the same environment. There exist in fact environments whose features are such that a public operator does not arrive to extend its infrastructure in a sufficiently capillary way. Said manager can make one or more deals with telecommunication operators so to have access to one or more geographical wide area networks 350. The access to said geographical wide area networks 350 occurs generally form precise points of said circumscribed environment, and specifically, by means of suitable terminals 150 whose main function is to activate or deactivate communications.

With the system described in this invention, the manager of said local area network 110 can easily apply a method to allow the users hosted in the circumscribed environment, managed by him, to use telecommunication services by means of the geographical wide area networks reachable from said environment.

The method allows to control also the use which said users make of these services, in order to avoid, for example, abuses or for their commercial exploitation.

The method proposed is based on a two-step access: firstly the users access to the local area network 110, and in the following, after they are registered and the services which are allowed to them controlled, there are activated the connections to the geographical wide area networks which allow the traffic generated by the hosted users (registered) in the local area network 110 to exchange traffic with the geographical wide area networks 350.

More precisely, the method comprises three essential steps, which can be summed up in the following three points:
a. registration to the local area network of a user device 440 previously enabled;
b. verification of the rights and qualifications of said terminal 440;
c. activation of the connections supporting the services requested by said user device 440 and compatible with his own rights.

Carrying out these three essential steps, together with other steps which make the process describing the single services more articulated allows very flexible services, and allows to implement usage strategies of the communications which optimize the suitable parameters; the cost parameters of the telecommunications can be extremely important. For example, when it is available more than one communication possibility, it is possible to chose the cheapest one.

It is also to be observed that, being possible to introduce servers of various type in the local area network 110, also locally there can be developed various services, and above all it is possible to carry out locally some functions which allow to save cost. For example, all the services not requesting interaction in real time on the geographical wide area networks can be locally buffered and carried out in better communication conditions. For example, the transmission of not urgent contents can be carried out by a generic user when this latter thinks it suitable, but the effective forwarding on the geographical wide area network 350 can occur when the general connection conditions are more advantageous; and similarly, it can occur for the content downloading, as, referring again to a previously cited example, the downloading of newspaper copies from the Internet.

## Claims

1. A system (100) including a local area network (110) having a plurality of users connected to said local area network (110) by means of their personal user devices (440), wherein said personal user devices (440) are adapted to carry out telecommunication traffic, originated by said plurality of users, towards destinations reachable through different geographical wide area networks (350), and said geographical wide area networks (350) are adapted to be accessed from the same location where said local area network (110) is located; and said system (100) is **characterized in that** said local area network (110) comprises:
✔ a pre-determined plurality of network terminals (150), each of said plurality of network terminals (150) adapted to access to a distinct geographical wide are network (350) by means of an access connection (250) distinct from network terminal (150) to network terminal (150); and
✔ control elements (120, 130) adapted to send to said plurality of network terminals (150), commands suitable to allow, or prevent, the exchange of telecommunication traffic, originated by said plurality of users, between the local area network (110) and each of said geographic wide area networks (350) via said plurality of network terminals (150), and to provide for the forwarding of said telecommunication traffic through a specific network terminal of said plurality of network terminals (150) which is configured to connect said local area network (110) to a chosen geographical wide area network (350).

2. The system according to claim 1 wherein said personal user devices (440) are adapted to access said local area network wirelessly.

3. The system according to claim 1 which comprises a controller of connectivity to geographical wide area networks (120), which is adapted to perform procedures of activation and deactivation of the connections (250) to wide area networks (350) by sending to the plurality of terminals (150) commands which are suitable to control said connections (250).

4. The system according to claim 3, wherein said controller of connectivity to geographical wide area networks (120) is adapted to execute an authorization procedure that enables said connections (250), once activated, to support the transit of the authorized data streams only.

5. The system according to any one of the preceding claims, which comprises a controller of access to the local area network subsystem (130), which is configured to execute an enabling procedure for the personal user devices (440) that have accessed to the local area network (110).

6. The system according to claim 5, wherein said controller of access to the local area network subsystem (130), during the execution of said enabling procedure, is configured to communicate to said personal user devices (440) which geographical wide area network (350) is adapted to be used for the communications outside the local area network (110).

7. The system according to claim 5, wherein said controller of access to the local area network subsystem (130) is adapted to execute a registration procedure for said personal user devices (440) which were previously enabled.

8. The system according to claim 7, wherein said controller of access to the local area network subsystem (130) is adapted to communicate in real time to said registered personal user devices (440) the status of the geographical wide area networks (350) that are adapted to be used to communicate outside the local area network (110).

9. The system according to claim 7 which includes a controller of access to the local area network subsystem (130) which is adapted to execute a registration procedure of of a user equipment from said personal user devices (440) and is adapted to allow said user equipment (440) to exchange telecommunication traffic only towards those geographical wide area networks (350) provided by the corresponding user profile which is locally stored in some storage means connected to said local area network (110).

10. The system according to claim 4 which includes a controller of access to the local area network subsystem (130) which is adapted to execute a counting procedure of the telecommunication traffic carried out by said personal user devices (440) via each connection (250).

11. The system according to any one of the preceding claims wherein one of the plurality of network terminals (150) is an access terminal to a satellite network, and another one of the plurality of network terminals (150) is an access terminal to a terrestrial mobile radio network.

## Patentansprüche

1. System (100), umfassend einen lokalen Netzwerkbereich (110) mit einer Vielzahl von Benutzern, die mit dem genannten lokalen Netzwerkbereich (110) mittels ihrer persönlichen Benutzergeräte (440) verbunden sind, wobei die genannten persönlichen Benutzergeräte (440) angepasst sind um einen Telekommunikationsverkehr durchzuführen, der aus den genannten Vielzahl von Benutzern zu erreichbaren Zielen durch verschiedene geographische weiten Netzwerkbereiche (350) verursacht werden, und wobei die geographischen breiten Netzwerkbereiche (350) angepasst ist, um von der gleichen Lagen zugegriffen werden, wo der genannte lokale Netzwerkbereich (110) angeordnet ist; wobei das System (100) **dadurch gekennzeichnet ist, dass** der genannte lokale Netzwerkbereich (110) umfasst:
✔ eine vorbestimmte Vielzahl von Netzwerkterminals (150), wobei jedes der Vielzahl von Netzwerkterminals (150) dazu ausgebildet ist, mittels einer vom Netzwerkterminal (150) verschiedenen Zugangsverbindung (250) auf ein bestimmtes geographisches weiten Netzwerkbereich (350) an das Netzwerkterminal (150) zuzugreifen, und
✔ Steuerelemente (120, 130), die um eine Vielzahl von Netzwerkterminals (150) zu senden angepasst sind, geeignete Befehle einen Austausch von Telekommunikationsverkehr zu erlauben oder verhindern, der durch die Vielzahl von Benutzern, zwischen dem lokalen Netzwerk (110) und jedem der weiten Netzwerkbereichen (350) über die genannte Vielzahl von Netzwerkterminals (150), und für die Weiterleitung des Telekommunikationsverkehrs durch einen bestimmtes Netzwerkterminal der genannten Vielzahl von Netzwerkterminals (150) zu sorgen, das derart konfiguriert ist, um den genannten lokalen Netzwerkbereich (110) mit einem ausgewählten geografischen weiten Netzwerkbereich (350) zu verbinden.

2. System nach Anspruch 1, wobei die persönlichen Benutzervorrichtungen (440) für den Zugriff an den genannten lokalen Netzwerkbereich drahtlos angepasst sind.

3. System nach Anspruch 1, umfassend einen Kontroller der Konnektivität auf weiten geographischen Netzwerkbereiche (120), wobei der Kontroller angepasst ist, um die Aktivierungs- und Deaktivierungsprozesse der Anschlüsse (250) zu weiten Netzwerkberiechen (350) durchzuführen, indem er an die Vielzahl von Netzwerkterminals (150) Befehle sendet, die geeignet sind, die Anschlüsse (250) zu steuern.

4. System nach Anspruch 3, wobei der Kontroller der Konnektivität zu weiten geographischen Netzwerkberiechen (120) angepasst ist, um ein Autorisierungsprozess auszuführen, das ermöglicht dass die genannten Anschlüsse (250), einmal aktiviert, nur den Transit der autorisierten Datenströme unterstützen.

5. System nach einem der vorangehenden Ansprüche, umfassend einen Kontroller des Zugriffs auf das lokale Untersystem des lokalen Netzwerkbereich (130), das konfiguriert ist, um ein Freigabeprozess für die persönliche Benutzervorrichtungen (440) durchzuführen, die zum lokalen Netzwerkberiech (110) zugreifen können.

6. System nach Anspruch 5, wobei der Kontroller des Zugriffs auf das Untersystem (130) des lokalen Netzwerkbereiches, während der Ausführung des genannten Freigabeprozesses, mit den genannten persönlichen Benutzervorrichtungen (440) zu kommunizieren, konfiguriert ist, wobei ihr geografischer weiter Netzwerkbereich (350) derart angepasst ist, um für die Kommunikation außerhalb des lokalen Netzwerkberieche (110) verwendet zu werden.

7. System nach Anspruch 5, wobei der Kontroller Steuerung des Zugriffs auf das Untersystem (130) des lokalen Netzwerkbereiches (130) geeignet ist, um eine Registrierungsprozedur auszuführen, die für einen Registrationsprozess von persönlichen Benutzervorrichtungen (440) geeignet ist, die zuvor freigegeben worden sind.

8. System nach Anspruch 7, wobei der Kontroller des Zugriffs zum Untersystem (130) des lokalen Netzwerkbereich geeignet ist, um in Echtzeit an die genannten registrierten persönlichen Benutzervorrichtungen (440) den Zustand der weiten geographischen Netzwerkebereiche (350) zu kommunizieren, die geeignet sind, um zur Kommunikation außerhalb des lokalen Netzwerkbereiches (110) verwendet zu werden.

9. System nach Anspruch 7, das einen Kontroller des Zugriffs auf das Untersystem (130) des lokalen Netzwerkbereiches umfasst, der geeignet ist, ein Registrierungsprozess eines Benutzergeräts aus der genannten persönlichen Benutzervorrichtung (440) durchzuführen und angepasst ist, um dem Benutzergerät (440) zu ermöglichen, den Telekommunikationsverkehr nur gegen diejenigen geografischen weiten Netzwerkbereichen (350) auszutauschen, die durch das entsprechende Benutzerprofil bereitgestellt werden, und lokal in einigen Speichermitteln gespeichert sind, die mit dem lokalen Netzwerkbereich (110) verbunden sind.

10. System nach Anspruch 4, umfassend einen Kontroller des Zugriffs auf das Untersystem (130) des lokalen Netzwerkberiech (130), der angepasst ist, ein Zählprozess des Telekommunikationsverkehrs über jede Verbindung (250) durch die genannten persönlichen Benutzervorrichtungen (440) durchzuführen).

11. System nach einem der vorhergehenden Ansprüche, wobei eines der Vielzahl von Netzwerkterminals (150) ein Zugriffsterminal zu einem Satellitennetzwerk und ein anderes der Vielzahl von Netzwerkterminals (150) ein Zugriffsterminal mit einem terrestrisches Mobilfunknetzwerk, ist.

## Revendications

1. Système (100) comprenant un réseau local (110) ayant une pluralité d'utilisateurs connectés au dit réseau local (110) au moyen de leurs dispositifs d'utilisation personnels (440), lesdits dispositifs d'utilisation personnels (440) étant adaptés pour effectuer un trafic de télécommunication, émis par ladite pluralité d'utilisateurs, vers des destinations accessibles par des différents réseaux géographiques (350) à grande distance, et lesdits réseaux géographiques à grande distance (350) sont adaptés pour être accessibles à partir du même emplacement dans lequel ledit réseau local (110) est situé; et ledit système (100) est **caractérisé en ce que** ledit réseau local (110) comprend:
✔ une pluralité prédéterminée de terminaux de réseau (150), chacun de ladite pluralité de terminaux de réseau (150) étant adapté pour accéder à un réseau géographique distinct à grande distance (350) au moyen d'une connexion d'accès (250) distincte du terminal de réseau (150) au terminal de réseau (150), et
✔ des éléments de commande (120, 130) adaptés pour envoyer à ladite pluralité de terminaux de réseau (150) des commandes appropriées pour permettre ou empêcher l'échange du trafic de télécommunication, émis par ladite pluralité d'utilisateurs, entre le réseau local (110) et chacun desdits réseaux à grande distance (350) par l'intermédiaire de ladite pluralité de terminaux de réseau de (150), et à subvenir aux besoins pour la transmission dudit trafic de télécommunication à travers un réseau spécifique terminal de ladite pluralité de terminaux de réseau (150), qui est configuré pour connecter ledit réseau local (110) à un réseau géographique à grande distance choisi (350) .

2. Système selon la revendication 1, dans lequel lesdits dispositifs d'utilisation individuels (440) sont adaptés pour accéder audit réseau local sans fil.

3. Système selon la revendication 1, qui comprend un contrôleur de connectivité à des réseaux géographiques à grande distance (120), qui est adapté pour exécuter les procédures d'activation et de désactivation des connexions (250) à des réseaux à grande distance (350) en envoyant à la pluralité de commandes de terminaux de réseau (150) des commandes appropriées pour commander lesdites connexions (250).

4. Système selon la revendication 3, dans lequel ledit contrôleur de connexion à des réseaux géographiques à grande distance (120) est adapté pour exécuter une procédure d'autorisation permettant auxdites connexions (250), une fois activée, de soutenir seulement le transit du flux de données autorisé.

5. Système selon l'une quelconque des revendications précédentes, comprenant un contrôleur d'accès au sous-système de réseau local (130) configuré pour exécuter une procédure permettant aux dispositifs utilisateurs individuels (440) d'accéder au réseau local (110).

6. Système selon la revendication 5, dans lequel ledit contrôleur d'accès au sous-système de réseau local (130), pendant l'exécution de ladite procédure d'autorisation, est configuré pour communiquer auxdits dispositifs d'utilisation individuels (440) à quel réseau géographique à grande distance (350) il est adapté pour être utilisé pour les communications en dehors du réseau local (110).

7. Système selon la revendication 5, dans lequel ledit contrôleur d'accès au sous-système de réseau local (130) est adapté pour exécuter une procédure d'enregistrement pour lesdits dispositifs d'utilisation personnels (440) qui ont été précédemment permis.

8. Système selon la revendication 7, dans lequel ledit contrôleur d'accès au sous-système de réseau local (130) est adapté pour communiquer en temps réel auxdits dispositifs d'utilisation (440) l'état des réseaux géographiques à grande distance (350) qui sont adaptés pour être utilisés pour communiquer en dehors du réseau local (110).

9. Système selon la revendication 7, comprenant un contrôleur d'accès au sous-système de réseau local (130) adapté pour exécuter une procédure d'enregistrement d'un équipement d'utilisation à partir dudit dispositif d'utilisation personnel (440) et est adapté pour permettre audit équipement d'utilisation (440) d'échanger le trafic de télécommunication uniquement vers les réseaux géographiques à grande distance 350) fournis par le profil d'utilisation correspondant qui est mémorisé localement dans certains moyens de mémoire connectés audit réseau local (110).

10. Système selon la revendication 4, comprenant un contrôleur d'accès au sous-système de réseau local (130) adapté pour exécuter une procédure de comptage du trafic de télécommunication effectuée par lesdits dispositifs d'utilisation personnels (440) par l'intermédiaire de chaque connexion (250).

11. Système selon l'une quelconque des revendications précédentes, dans lequel un de la pluralité de terminaux de réseau (150) est un terminal d'accès à un réseau par satellite et un autre de la pluralité de terminaux de réseau (150) est un terminal d'accès à un réseau de radio mobile terrestre.
